# EUROPEAN PATENT APPLICATION

(11) **EP 4 570 621 A1**
(43) Date of publication of application: **18.06.2025**
(21) Application number: 24854244.1
(22) Date of filing: 11.03.2024
(51) Int. Cl.: B62D 5/00, B62D 1/16, B62D 5/04, B62D 15/02

(54) **STEERING INPUT DEVICE AND MOBILITY APPARATUS INCLUDING SAME**

(30) Priority: 17.08.2023 KR 20230107407
(71) Applicant: HL Mando Corporation, Pyeongtaek-si, Gyeonggi-do 17962 (KR)
(72) Inventor: CHO, Seong Jong, Pyeongtaek-si, Gyeonggi-do 17962 (KR)
(74) Representative: Pfenning, Meinig & Partner mbB
(86) International application number: PCT/KR2024/003067
(87) International publication number: WO 2025/037690

(57) **Abstract**

Provided according to the present embodiments are a steering input device and a mobility apparatus including same, the device comprising: a steering shaft; a rotor which is coupled to the steering shaft and has a spring having, between both ends thereof, a separation space formed in the circumferential direction; a first support member which is coupled to the rotor and
positioned in the separation space; a housing to which the steering shaft is rotatably coupled and which accommodates the rotor
therein; a second support member which is positioned in the separation space; and coupling members which couple the second support member to the housing.

## Description

### [Technical Field]

The present embodiments relate to a steering input device and a mobility vehicle including the same.

### [Background Art]

Recently, interest in small mobility vehicles has been increasing. Small mobility vehicles may be used as urban mobility vehicles suitable for a small number of passengers and short distance travel. These small mobility vehicles are designed with a lightweight body and a high center of gravity. To compensate for the reduced driving stability caused by the lightweight body and high center of gravity and to provide drivers with dynamic driving, small mobility vehicles may be equipped with the lean function that tilts the body depending on the driving direction.

The small mobility vehicle includes a steering input device for the driver to input steering wheel manipulation, a steering actuator for generating a steering force for steering the wheels according to the steering wheel manipulation, and a lean actuator for performing the lean function.

Given their small body and uses, small mobility vehicles require that various devices equipped therein be small in size.

### [Detailed Description of the Invention]

### [Technical Problem]

Conceived in the foregoing background, the present embodiments relate to a steering input device having a compact structure and capable of enhancing the driver's sense of steering and a mobility vehicle including the same.

### [Technical Solution]

According to the present embodiments, there may be provided a steering input device comprising a steering shaft, a rotor coupled to the steering shaft and having a spring with a circumferential separation space formed between two opposite ends thereof, a first supporting member coupled to the rotor and positioned in the separation space, a housing rotatably coupled with the steering shaft to receive the rotor, a second supporting member positioned in the separation space, and a coupling member coupling the second supporting member to the housing.

According to the present embodiments, there may be provided a mobility vehicle comprising a steering input device including a steering shaft, a rotor coupled to the steering shaft and having a spring with a circumferential separation space formed between two opposite ends thereof, a first supporting member coupled to the rotor and positioned in the separation space, a housing rotatably coupled with the steering shaft to receive the rotor, a second supporting member positioned in the separation space, and a coupling member coupling the second supporting member to the housing.

### [Advantageous Effects]

According to the present embodiments, there may be provided a steering input device having a compact structure and capable of enhancing the driver's sense of steering and a mobility vehicle including the same.

### [Brief Description of Drawings]

FIG. 1 is an exploded perspective view illustrating a steering input device according to the present embodiments;
FIG. 2 is a cross-sectional view illustrating a steering input device according to the present embodiments;
FIG. 3 is an exploded perspective view illustrating a portion of a steering input device according to the present embodiments;
FIG. 4 is a front view illustrating a portion of a steering input device according to the present embodiments;
FIG. 5 is a front view illustrating a portion of a steering input device according to the present embodiments;
FIG. 6 is a view illustrating operations of a steering input device according to the present embodiments;
FIG. 7 is an exploded perspective view illustrating a portion of a steering input device according to the present embodiments;
FIG. 8 is a plan view illustrating a portion of a steering input device according to the present embodiments; and
FIGS. 9A, 9B, and 9C are views illustrating a mobility vehicle according to the present embodiments.

### [Mode for Carrying out the Invention]

In the following description of examples or embodiments of the disclosure, reference will be made to the accompanying drawings in which it is shown by way of illustration specific examples or embodiments that can be implemented, and in which the same reference numerals and signs can be used to designate the same or like components even when they are shown in different accompanying drawings from one another. Further, in the following description of examples or embodiments of the disclosure, detailed descriptions of well-known functions and components incorporated herein will be omitted when it is determined that the description may make the subject matter in some embodiments of the disclosure rather unclear. The terms such as "including", "having", "containing", "constituting" "make up of", and "formed of" used herein are generally intended to allow other components to be added unless the terms are used with the term "only". As used herein, singular forms are intended to include plural forms unless the context clearly indicates otherwise.

Terms, such as "first", "second", "A", "B", "(A)", or "(B)" may be used herein to describe elements of the disclosure. Each of these terms is not used to define essence, order, sequence, or number of elements etc., but is used merely to distinguish the corresponding element from other elements.

When it is mentioned that a first element "is connected or coupled to", "contacts or overlaps" etc. a second element, it should be interpreted that, not only can the first element "be directly connected or coupled to" or "directly contact or overlap" the second element, but a third element can also be "interposed" between the first and second elements, or the first and second elements can "be connected or coupled to", "contact or overlap", etc. each other via a fourth element. Here, the second element may be included in at least one of two or more elements that "are connected or coupled to", "contact or overlap", etc. each other.

When time relative terms, such as "after," "subsequent to," "next," "before," and the like, are used to describe processes or operations of elements or configurations, or flows or steps in operating, processing, manufacturing methods, these terms may be used to describe non-consecutive or non-sequential processes or operations unless the term "directly" or "immediately" is used together.

In addition, when any dimensions, relative sizes etc. are mentioned, it should be considered that numerical values for an elements or features, or corresponding information (e.g., level, range, etc.) include a tolerance or error range that may be caused by various factors (e.g., process factors, internal or external impact, noise, etc.) even when a relevant description is not specified. Further, the term "may" fully encompasses all the meanings of the term "can".

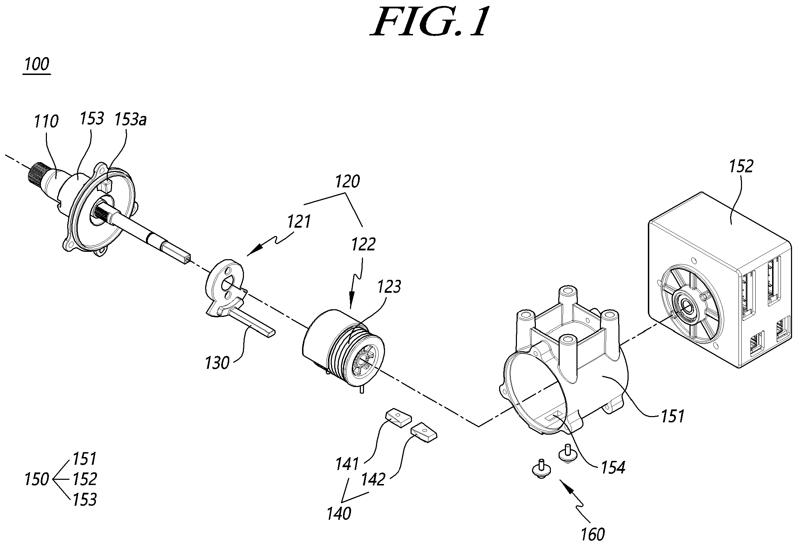

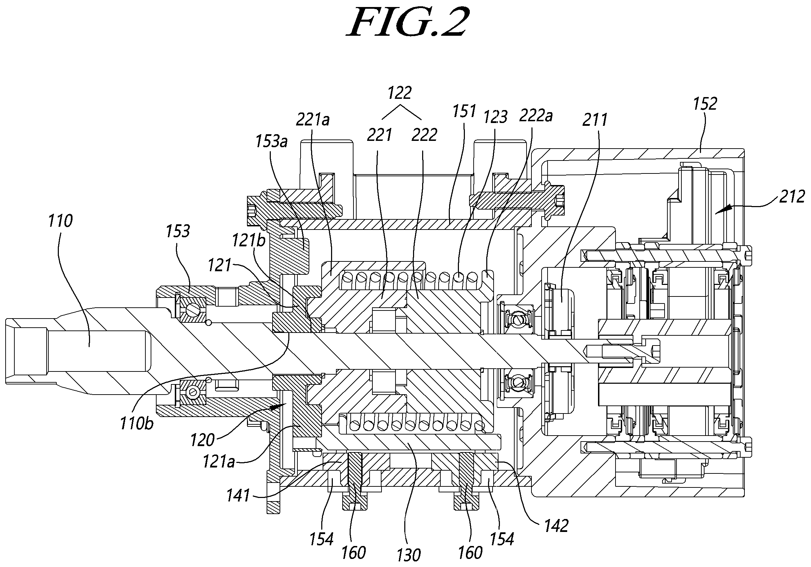

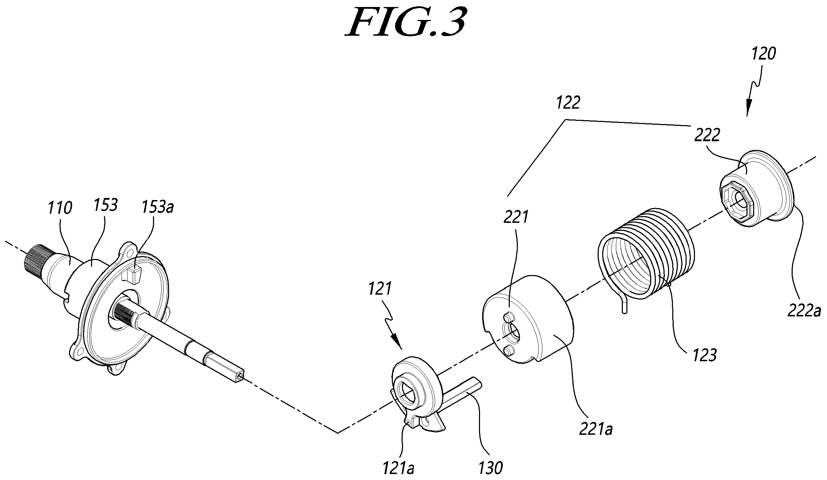

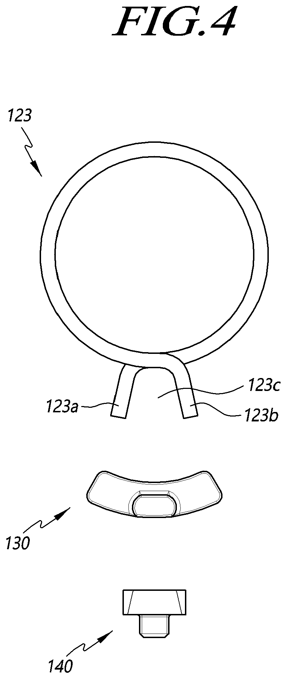

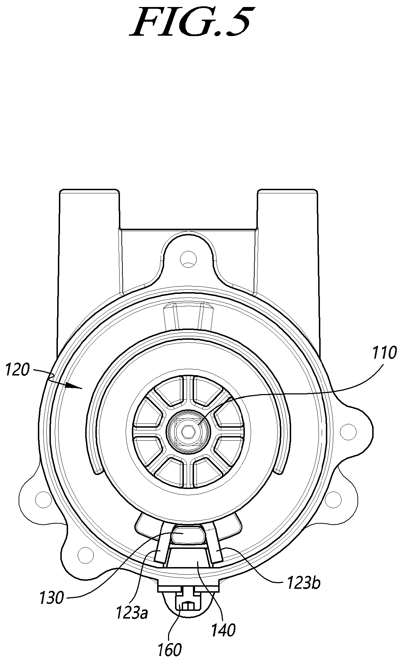

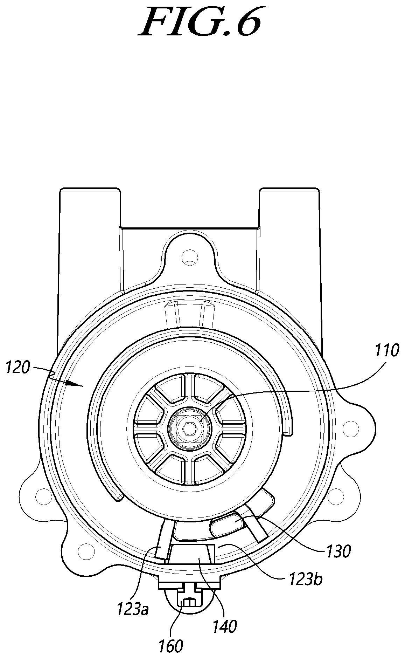

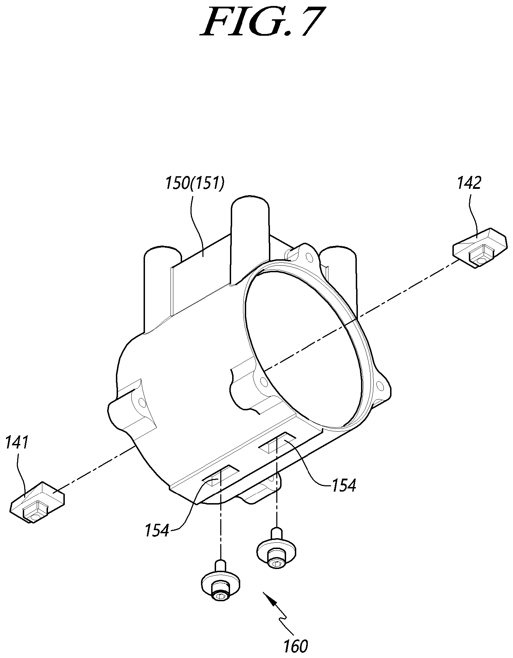

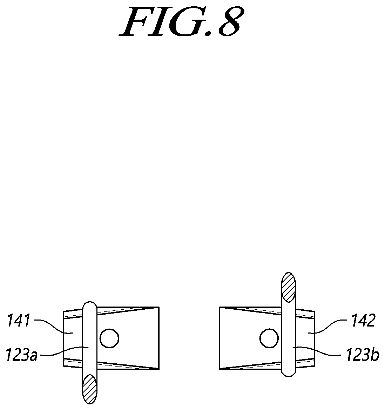

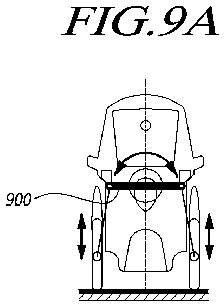

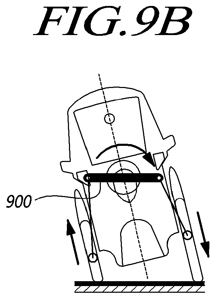

FIG. 1 is an exploded perspective view illustrating a steering input device according to the present embodiments. FIG. 2 is a cross-sectional view illustrating a steering input device according to the present embodiments. FIG. 3 is an exploded perspective view illustrating a portion of a steering input device according to the present embodiments. FIG. 4 is a front view illustrating a portion of a steering input device according to the present embodiments. FIG. 5 is a front view illustrating a portion of a steering input device according to the present embodiments. FIG. 6 is a view illustrating operations of a steering input device according to the present embodiments. FIG. 7 is an exploded perspective view illustrating a portion of a steering input device according to the present embodiments. FIG. 8 is a plan view illustrating a portion of a steering input device according to the present embodiments. FIGS. 9A and 9B are cross-sectional views illustrating a portion of a steering input device according to the present embodiments. FIGS. 10A, 10B, and 10C are views illustrating a mobility vehicle according to the present embodiments.

According to the present embodiments, there may be provided a steering input device 100 comprising a steering shaft 110, a rotor 120 coupled to the steering shaft 110 and having a spring 123 with a circumferential separation space 123c formed between two opposite ends thereof, a first supporting member 130 coupled to the rotor 120 and positioned in the separation space 123c, a housing 150 rotatably coupled with the steering shaft 110 to receive the rotor 120, a second supporting member 140 positioned in the separation space 123c, and a coupling member 160 coupling the second supporting member 140 to the housing 150.

According to the present embodiments, there may also be provided a mobility vehicle including the steering input device 100.

The lean function of the mobility vehicle according to the present embodiments is described with reference to FIGS. 9A to 9C. FIG. 9A illustrates a state in which the lean function of the mobility vehicle according to the present embodiments is not performed, e.g., stop, advance, or reverse state.

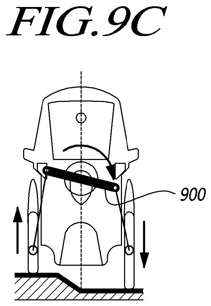

FIGS. 9B and 9C illustrate states in which the lean function of the mobility vehicle according to the present embodiments is performed. FIG. 9B illustrates a state in which the vehicle body is tilted by the lean function while turning, and FIG. 9C illustrates a state in which the heights of the left and right wheels are offset by the lean function in a stepped area.

In other words, the use of the lean function may enhance driving stability while turning and provide a dynamic driving environment to the user while providing suspension against the stepped ground surface.

The mobility vehicle according to the present embodiments includes a lean bar 900 of which two opposite ends are connected to the left and right wheels to perform the lean function. The two opposite ends of the lean bar 900 are connected to the left and right wheels through a linkage structure. The mobility vehicle according to the present embodiments includes a lean actuator which rotates the lean bar to perform the lean function.

The mobility vehicle according to the present embodiments includes a steering input device 100 according to the present embodiments. The steering input device 100 according to the present embodiments is provided in the mobility vehicle according to the present embodiments and receives the driver's steering input.

According to an embodiment, the mobility vehicle according to the present embodiments may further include a steering angle sensor for sensing the rotational angle of the steering shaft, a steering actuator for generating a steering force for steering the wheels, and an electronic control unit receiving rotational angle information about the steering shaft from the steering angle sensor to control the steering actuator.

The steering wheel may be connected to the steering shaft, and the driver may operate the steering input device 100 according to the present embodiments, through steering wheel manipulation. The steering angle sensor senses the rotational angle of the steering shaft and transmits the rotational angle to the electronic control unit. The electronic control unit may control the steering actuator based on the rotational angle information about the steering shaft received from the steering angle sensor and other information, e.g., the vehicle velocity and the driver's steering torque. Under the control of the electronic control unit, the steering actuator generates a steering force for steering the wheels, and steering of the mobility vehicle according to the present embodiments is performed.

According to an embodiment, the steering actuator may steer the front wheels. The two front wheels of the mobility vehicle according to the present embodiments may be connected to the lean bar, and the lean function may be performed by the lean actuator, and they may be steered by the steering actuator.

Referring to FIGS. 1 to 4, the steering input device 100 according to the present embodiments may include a steering shaft 110, a rotor 120, a first supporting member 130, a housing 150, a second supporting member 140, and a coupling member 160.

The steering shaft 110 is connected to the steering wheel and is rotated by the steering wheel manipulation of the driver. The rotor 120 is coupled to the steering shaft 110 and rotated together with the steering shaft 110. The steering shaft 110 is rotatably coupled to the housing 150. The steering shaft 110 may be coupled to the housing 150 by a bearing.

The housing 150 receives the rotor 120. The housing 150 may include a main housing 151 formed as a hollow to receive the rotor 120, a cover housing 153 coupled with one side of the steering shaft 110 and coupled to the main housing 151, and a sensor housing 152 coupled with the other side of the steering shaft 110 to receive a sensor 212 to be described below. The main housing 151 may be coupled to the vehicle body, and the steering input device 100 according to the present embodiments may be installed.

The rotor 120 has a spring 123. As the steering shaft 110 rotates, torque generated as the spring 123 twists is provided to the steering shaft 110 as a reaction torque, enhancing the driver's sense of steering. Further, the steering wheel rotated by the torque provided by the spring 123 may be returned to the neutral position.

A circumferential separation space 123c is formed between one end (see reference numeral 123a) and the other end (see reference numeral 123b) of the spring 123 (see FIG. 4). The first supporting member 130 and the second supporting member 140 are positioned in the separation space 123c formed between the two opposite ends of the spring 123 (see FIG. 5).

Since the sense of steering provided to the driver should be the same regardless of the steering wheel rotation direction, the two opposite ends of the spring 123, the first supporting member 130, and the second supporting member 140 are provided left/right symmetrically to each other. As illustrated in the drawings, the first supporting member 130 may have a rod shape parallel to the steering shaft 110, and the two opposite ends of the spring 123 may be supported.

The second supporting member 140 may include a first support 141 supporting one end of the spring 123 and a second support 142 supporting the other end of the spring 123, as is described below in detail.

The first supporting member 130 is coupled to the rotor 120 and rotated together with the steering shaft 110, and the second supporting member 140 is coupled to the housing 150 by the coupling member 160. In other words, when the steering shaft 110 is rotated, the first supporting member 130 is rotated but the second supporting member 140 is fixed. The first supporting member 130 is rotated while being supported on the one end or the other end of the spring 123 by the rotation of the steering shaft 110, but the other end or the one end of the spring 123 is supported and fixed to the second supporting member 140.

Accordingly, the spring 123 is twisted, and a reaction torque is provided to the steering shaft 110. A structure for providing a reaction torque due to twisting of the spring 123 is described below in detail.

Referring to FIG. 2, the steering input device 100 according to the present embodiments may further include a damper 211 coupled to the steering shaft 110 and the housing 150. The damper 211 may be coupled to an end portion of the steering shaft 110 and coupled to the sensor housing 152. The damper 211 provides damping in the rotational direction to the steering shaft 110, thereby enhancing the sense of steering.

Further, according to an embodiment, the steering input device 100 according to the present embodiments may further include a sensor 212 for sensing the rotational angle of the steering shaft 110.

The sensor 212 may sense the rotational angle of the steering shaft 110 and transmit the rotational angle information to an electronic control unit that controls a steering actuator that generates a steering force for steering a wheel. In other words, the steering shaft 110 of the steering input device 100 according to the present embodiments may not be mechanically connected to the steered wheel.

The electronic control unit may control the steering actuator based on the rotational angle information sensed by the sensor 212 and other information sensed by other sensors, e.g., vehicle velocity, steering torque of the driver, etc.

Referring to FIGS. 2 and 3, according to an embodiment, the rotor 120 may include a first rotor 121 coupled with the first supporting member 130 and a second rotor 122 where the spring 123 is seated.

According to an embodiment, at least one of the first rotor 121 and the steering shaft 110 may have serrations 121b and 110b and be coupled via the serrations. Accordingly, the rotor 120 and the steering shaft 110 may be circumferentially fixed to be rotated together.

According to an embodiment, the first rotor 121 may have a first stopper 121a, and the housing 150 may have a second stopper 153a that may be circumferentially supported on the first stopper 121a. The rotation of the steering shaft 110 is stopped as the first stopper 121a is supported by the second stopper 153a.

According to an embodiment, the first stopper 121a may be formed on one axial side surface of the first rotor 121, and the first supporting member 130 may be coupled to the other axial side surface of the first rotor 121.

The second stopper 153a is formed on the inner surface of the sensor housing 152, and the first stopper 121a and the second stopper 153a are formed on surfaces facing each other of the first rotor 121 and the sensor housing 152, respectively. The first supporting member 130 may be coupled to the other axial side surface of the first rotor 121, i.e., the surface opposite to the surface where the first stopper 121a is formed.

According to an embodiment, the spring 123 may be seated on an outer surface of the second rotor 122. The second rotor 122 may be coupled to the other axial side surface of the first rotor 121, i.e., the surface to which the first supporting member 130 is coupled. Accordingly, the first rotor 121 and the second rotor 122 are rotated together. The spring 123 is seated on the outer surface of the second rotor 122, and as is described below, two opposite end portions of the spring 123 are bent and protrude radially from the outer surface of the second rotor 122.

According to an embodiment, the second rotor 122 may include a first bushing 221 coupled to the first rotor 121 and having a first protrusion 221a formed on an outer surface thereof to be supported by the spring 123 on one axial side and a second bushing 222 coupled to the first bushing 221 and having a second protrusion 222a formed on an outer surface thereof to be supported by the spring 123 on the other axial side.

The first bushing 221 and the second bushing 222 are coupled in the axial direction, and the spring 123 is positioned between the first protrusion 221a and the second protrusion 222a on the outer surface of the first bushing 221 and the second bushing 222 (see FIG. 2).

Referring to FIGS. 4 and 5, according to an embodiment, one end and the other end of the spring 123 may be bent and radially extend, forming a separation space 123c. The two opposite ends of the spring 123 are axially spaced apart from each other while forming the circumferential separation space 123c.

According to an embodiment, the one end of the spring 123 may be supported on one circumferential side by the first supporting member 130, and the other end of the spring 123 may be supported on the other circumferential side by the first supporting member 130. In other words, the one end and the other end of the spring 123 are supported on their opposite sides by the first supporting member 130 positioned in the separation space 123c.

When the rotor 120 is rotated to one circumferential side together with the steering shaft 110, the first supporting member 130 is rotated while being supported on one end of the spring 123. Since the other end of the spring 123 is supported by the fixed second supporting member 140 without being rotated, the spring 123 is twisted, providing reaction torque to the steering shaft 110.

Conversely, if the rotor 120 together with the steering shaft 110 is rotated to the other side in the circumferential direction, the first supporting member 130 is rotated while being supported on the other end of the spring 123, and one end of the spring 123 is supported by the fixed second supporting member 140 and is not rotated, so that the spring 123 may be twisted, providing reaction torque to the steering shaft 110.

According to an embodiment, one end of the spring 123 may be simultaneously supported on one circumferential side thereof by the first supporting member 130 and the second supporting member 140, and the other end of the spring 123 may be simultaneously supported on the other circumferential side thereof by the first supporting member 130 and the second supporting member 140. In other words, the one end and the other end of the spring 123 may be supported on their opposite sides, respectively, simultaneously by the first supporting member 130 and the second supporting member 140.

If the two opposite ends of the spring 123 are not simultaneously supported by the first supporting member 130 and the second supporting member 140, the driver's sense of steering decreases.

In other words, if the two opposite ends of the spring 123 are supported only by the first supporting member 130 in the neutral state of the steering wheel, and a gap is present between two opposite side surfaces of the second supporting member 140, when the steering shaft 110 is circumferentially rotated, the spring 123 is not twisted until the end portion of the spring 123 is supported by the second supporting member 140, so that no reaction torque is provided, thus deteriorating the sense of steering.

Or, if the two opposite ends of the spring 123 are supported only by the second supporting member 140 in the neutral state of the steering wheel, and a gap is present between the two opposite ends of the spring 123 and the two opposite side surfaces of the first supporting member 130, the steering shaft 110 is idled until the end portion of the spring 123 is supported by the first supporting member 130, deteriorating the sense of steering.

Further, if the two opposite ends of the spring 123 are supported by neither the first supporting member 130 or the second supporting member 140 in the neutral state of the steering wheel, the driver's sense of steering decreases. Therefore, in order to provide a better sense of steering to the driver, the two opposite ends of the spring 123 need to be simultaneously supported by the first supporting member 130 and the second supporting member 140.

FIG. 5 illustrates a state in which two opposite ends of the spring 123 are simultaneously supported by the first supporting member 130 and the second supporting member 140 at a neutral position. FIG. 6 illustrates a state in which the steering shaft 110 is rotated counterclockwise from the neutral position, one end of the spring 123 is fixed while being supported by the second supporting member 140, and the other end of the spring 123 is rotated while being supported by the first supporting member 130.

As illustrated in FIG. 5, as two opposite ends of the spring 123 are simultaneously supported by the first supporting member 130 and the second supporting member 140 in the neutral state, when the steering shaft 110 is rotated as illustrated in FIG. 6, one end or the other end of the spring 123 are stopped from moving by the second supporting member 140 even when the first supporting member 130 is rotated.

Accordingly, as soon as the driver rotates the steering wheel from the neutral position, the spring 123 is twisted and a reaction torque is provided. When there is a gap between the end portion of the spring 123 and the second supporting member 140, the spring 123 is not twisted until before the driver rotates the steering wheel by the gap, and thus the sense of steering is reduced. Through such a structure, the steering input device 100 according to the present embodiments may provide a better sense of steering to the driver.

However, given, e.g., manufacture tolerances or assembly tolerances, it is impossible to actually assemble components so that two opposite ends of the spring 123 are simultaneously supported by the first supporting member 130 and the second supporting member 140. Accordingly, a design is required for assembling the device so that two opposite ends of the spring 123 is simultaneously supported by the first supporting member 130 and the second supporting member 140.

According to an embodiment, the second supporting member 140 may include a first support 141 supporting one end of the spring 123 and a second support 142 supporting the other end of the spring 123.

The first supporting member 130 may be formed as a single body and may be simultaneously supported on two opposite ends of the spring 123, and the second supporting member 140 may be separated into the first support 141 and the second support 142 which, respectively, may be supported on one end and the other end of the spring 123. In other words, one end of the spring 123 may be simultaneously supported by the first supporting member 130 and the first support 141, and the other end of the spring 123 may be simultaneously supported by the first supporting member 130 and the second support 142.

According to an embodiment, the first support 141 may be coupled to the housing 150 to tightly contact one end of the spring 123 supported by the first supporting member 130, and the second support 142 may be coupled to the housing 150 to tightly contact the other end of the spring 123 supported by the second supporting member 140.

In other words, with the two opposite ends of the spring 123 supported on two opposite side surfaces of the first supporting member 130, the first support 141 and the second support 142 may be coupled to the housing 150 to tightly contact the one end and the other end, respectively, of the spring 123 in the separation space 123c. Accordingly, one end of the spring 123 may be simultaneously supported by the first supporting member 130 and the first support 141, and the other end of the spring 123 may be simultaneously supported by the first supporting member 130 and the second support 142.

Referring to FIGS. 2 and 7, according to an embodiment, the housing 150 has a slit 154 where the first support 141 and the second support 142 are inserted to be axially movable, and the first support 141 and the second support 142 may be fixed to the housing 150 in the slit 154 by the coupling member 160.

In other words, the first support 141 and the second support 142 inserted in the slit 154 are movable along the direction where the slit 154 is formed. The first support 141 and second support 142, which are movable along the slit 154, are brought in tight contact with one end and the other end, respectively, of the spring 123, and are then fixed to the housing 150 by the coupling member 160, so that the two opposite ends of the protruding support 151b may be simultaneously supported by the first supporting member 130 and the second supporting member 140.

Referring to FIG. 8, according to an embodiment, the first support 141 and the second support 142 may be formed to have an axially narrowing width.

Two opposite side surfaces of the first support 141 and the second support 142 may have inclined surfaces, so that the width thereof may be narrowed along the axial direction. The first support 141 and the second support 142 may be formed to decrease in width from the inside in the axial direction toward the outside, i.e., in the direction in which the first support 141 and the second support 142 get away from each other.

Accordingly, while being positioned axially inside without contacting an end portion of the spring 123, the first support 141 and the second support 142 may be axially moved outward to be supported on the two opposite ends of the spring 123, in which state the first support 141 and the second support 142 may be fixed to the housing 150 by the coupling member 160.

By such an assembly method, the two opposite ends of the spring 123 may be simultaneously supported by the first supporting member 130 and the second supporting member 140.

By the so-structured steering input device and the mobility vehicle including the same, there may be provided a steering input device having a compact structure and capable of enhancing the driver's sense of steering and a mobility vehicle including the same.

The above description has been presented to enable any person skilled in the art to make and use the technical idea of the disclosure, and has been provided in the context of a particular application and its requirements. Various modifications, additions and substitutions to the described embodiments will be readily apparent to those skilled in the art, and the general principles defined herein may be applied to other embodiments and applications without departing from the spirit and scope of the disclosure. The above description and the accompanying drawings provide an example of the technical idea of the disclosure for illustrative purposes only. That is, the disclosed embodiments are intended to illustrate the scope of the technical idea of the disclosure. Thus, the scope of the disclosure is not limited to the embodiments shown, but is to be accorded the widest scope consistent with the claims. The scope of protection of the disclosure should be construed based on the following claims, and all technical ideas within the scope of equivalents thereof should be construed as being included within the scope of the disclosure.

## Claims

1. A steering input device, comprising:
a steering shaft;
a rotor coupled to the steering shaft and having a spring with a circumferential separation space formed between two opposite ends thereof;
a first supporting member coupled to the rotor and positioned in the separation space;
a housing rotatably coupled with the steering shaft to receive the rotor;
a second supporting member positioned in the separation space; and
a coupling member coupling the second supporting member to the housing.

2. The steering input device of claim 1, further comprising a damper coupled to the steering shaft and the housing.

3. The steering input device of claim 1, further comprising a sensor sensing a rotational angle of the steering shaft.

4. The steering input device of claim 1, wherein the rotor includes:
a first rotor coupled with the first supporting member; and
a second rotor where the spring is seated.

5. The steering input device of claim 4, wherein at least one of the first rotor and the steering shaft has serrations.

6. The steering input device of claim 4, wherein the first rotor has a first stopper, and the housing has a second stopper circumferentially supportable on the first stopper.

7. The steering input device of claim 6, wherein the first stopper is formed on one axial side surface of the first rotor, and the second supporting member is coupled to another axial side surface of the first rotor.

8. The steering input device of claim 4, wherein the spring is seated on an outer surface of the second rotor.

9. The steering input device of claim 4, wherein the second rotor includes:
a first bushing coupled to the first rotor and having a first protrusion formed on an outer surface thereof to be supported by the spring on one axial side; and
a second bushing coupled to the first bushing and having a second protrusion formed on an outer surface thereof to be supported on another axial side.

10. The steering input device of claim 1, wherein the one end and the other end of the spring are bent and radially extend to have the separation space formed therebetween.

11. The steering input device of claim 10, wherein one end of the spring is supported on one circumferential side thereof by the first supporting member, and another end of the spring is supported on another circumferential side thereof by the first supporting member.

12. The steering input device of claim 10, wherein one end of the spring is simultaneously supported on one circumferential side thereof by the first supporting member and the second supporting member, and another end of the spring is simultaneously supported on another circumferential side thereof by the first supporting member and the second supporting member.

13. The steering input device of claim 1, wherein the second supporting member includes:
a first support supporting one end of the spring; and
a second support supporting another end of the spring.

14. The steering input device of claim 13, wherein positions of the first support and the second support coupled to the housing are adjustable.

15. The steering input device of claim 14, wherein the first support is coupled to the housing to tightly contact the one end of the spring supported by the first supporting member, and the second support is coupled to the housing to tightly contact the other end of the spring supported on the second supporting member.

16. The steering input device of claim 14, wherein the housing has a slit where the first support and the second support are inserted to be axially movable, and wherein the first support and the second support are fixed to the housing in the slit by the coupling member.

17. The steering input device of claim 13, wherein the first support and the second support are formed to have an axially narrowing width.

18. A mobility vehicle comprising the steering input device of claim 1.

19. The mobility vehicle of claim 18, further comprising:
a steering angle sensor sensing a rotational angle of the steering shaft;
a steering actuator generating a steering force for steering a wheel; and
an electronic control unit receiving rotational angle information about the steering shaft from the steering angle sensor and controlling the steering actuator.

20. The mobility vehicle of claim 19, wherein the steering actuator steers a front wheel.
